# EUROPEAN PATENT APPLICATION

(11) **EP 2 592 556 A1**
(43) Date of publication of application: **15.05.2013**
(21) Application number: 10854426.3
(22) Date of filing: 07.07.2010
(51) Int. Cl.: G06F 11/20, G06F 9/46, G06F 13/00

(54) **MANAGEMENT DEVICE, MANAGEMENT PROGRAM AND MANAGEMENT METHOD**

(71) Applicant: Fujitsu Limited, Kawasaki-shi, Kanagawa 211-8588 (JP)
(72) Inventor: TAMURA, Naohiro, Kawasaki-shi Kanagawa 211-8588 (JP); IWATANI, Sawao, Kawasaki-shi Kanagawa 211-8588 (JP)
(74) Representative: Ward, James Norman
(86) International application number: PCT/JP2010/061565
(87) International publication number: WO 2012/004872

(57) **Abstract**

An overlay network building unit (m11) of a management device (m1) builds an overlay network for a target network to be managed. A sign monitoring unit (m14) monitors an operating state of the hardware, for example, a fan, memory, CPU, and power supply unit of a target device to be managed, to detect a sign of trouble therein. When the sign monitoring unit (m14) detects a sign of failure, a guest movement unit (m15) moves a process executed by the target device to be managed to another node on the overlay network. A guest recalling unit (m16) determines whether there is a process having been moved from the target device to be managed to another node at the activation of the target device to be managed, and recalls a process having been moved from a destination node when there is the process moved to another node.

## Description

### Field

The present invention relates to a management device, a management program, and a management method for a network.

### Background Art

Conventionally, in a large scale system, such as a distributed computer system in a large scale data center, the hardware being responsible for processes is switched over, that is, processes are moved to different hardware, thereby enhancing the availability of the system. In one example, according to a known technique, a VM (Virtual Machines) host is operated on the hardware, and a VM guest is operated on this VM host.

The VM host is a program for virtually realizing the operating environment of another computer system. The VM guest operates as a virtual machine in an environment provided by the VM host, and is responsible for processes to be provided to a user. The VM guest can continue to perform processes even if it is moved to a different VM host.

Conventionally, there has been a known technique for detecting occurrence or a sign of failure in a computer on which the VM host operates, and there has been a known technique for moving a virtual machine guest to a different host.

### Citation List

### Patent Literature

Patent Document 1: Japanese Laid-open Patent Publication No. 2008-201433
Patent Document 2: Japanese Laid-open Patent Publication No. 2007-233687
Patent Document 3: Japanese National Publication of International Patent Application No. 2007-536657

### Summary

### Technical Problem

However, in the conventional techniques, the VM guest is repeatedly moved to another VM host, upon occurrence of trouble in a computer on which the VM host operates. This results in difficulty in identifying which is the original VM host on which the VM guest originally operated. If the VM host on which the VM guest originally operated is not identified, it is difficult to recall the VM guest to the original VM host.

If the moved VM guest is not recalled to the original host, the relationship between the VM host and the VM guest randomly changes in accordance with the system operation. As a result, the hardware is occasionally not used as intended.

The disclosure has been made in consideration of the above. It is accordingly an object thereof to recall the moved VM guest to the VM host on which the VM guest originally operated.

### Solution to Problem

A management device, a management program, and a management method disclosed in the present application monitor an operating state of a target device to be managed as a node of a network to be managed, and move a process executed by the target device to be managed to another node on the network, when a sign of failure is detected. The management device, the management program, and the management method determine, at activation of the target device to be managed, whether there is a process having been moved from the target device to be managed to another node, and recall the moved process from a destination node when there is the process having been moved to the another node.

### Advantageous Effects of Invention

According to the disclosed management device, the management program, and the management method of the present application, the moved VM guest can be recalled to the VM host on which the VM guest originally operated.

### Brief Description of Drawings

FIG. 1 is an explanatory diagram of a network according to an embodiment.
FIG. 2 is a block diagram of a management device according to an embodiment.
FIG. 3 is an explanatory diagram for implementation by a management program.
FIG. 4 is an explanatory diagram for the relationship between the hardware and the management program of a server.
FIG. 5 is an explanatory diagram of an overlay network.
FIG. 6 is an explanatory diagram of a concrete example of definitions of a hash table.
FIG. 7 is a diagram illustrating a concrete example of a self-node table t2 illustrated in FIG. 1.
FIG. 8 is a diagram illustrating a concrete example of a domain table t3 illustrated in FIG. 1.
FIG. 9 is a diagram illustrating a concrete example of a node management table t4 illustrated in FIG. 1.
FIG. 10 is a diagram illustrating a concrete example of a routing table t5 illustrated in FIG. 1.
FIG. 11 is a flowchart for explaining the movement of a VM guest.
FIG. 12 is a flowchart for explaining a process operation at the time of startup of a VM host.

### Description of Embodiments

Descriptions will now specifically be made to an embodiment of a network management device, a management program, and a management method, according to the present invention, based on the drawings. This embodiment is not to limit the disclosure.

### Embodiment

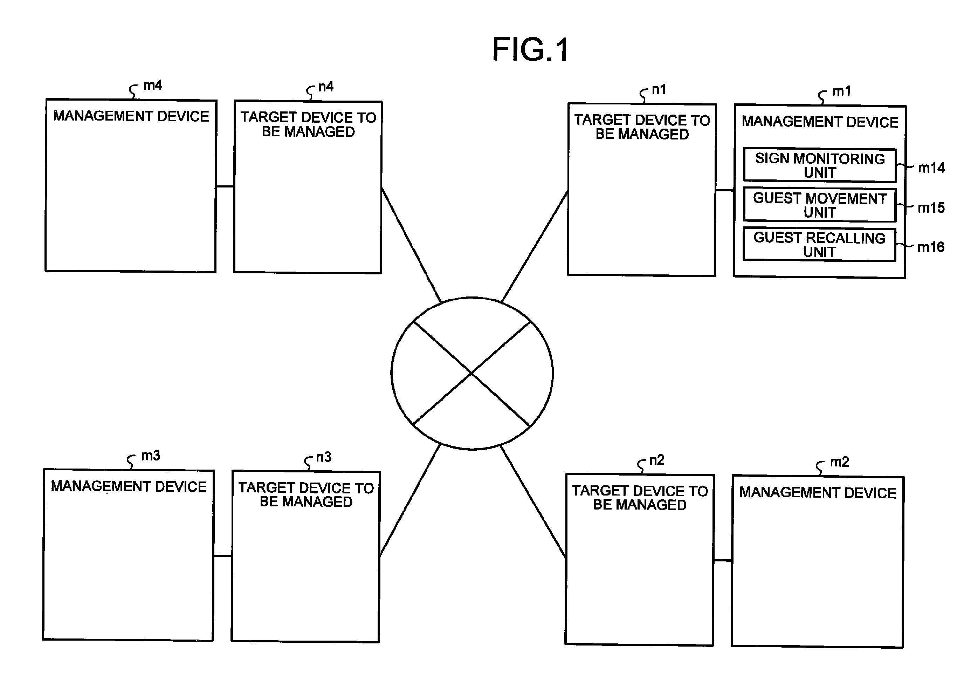

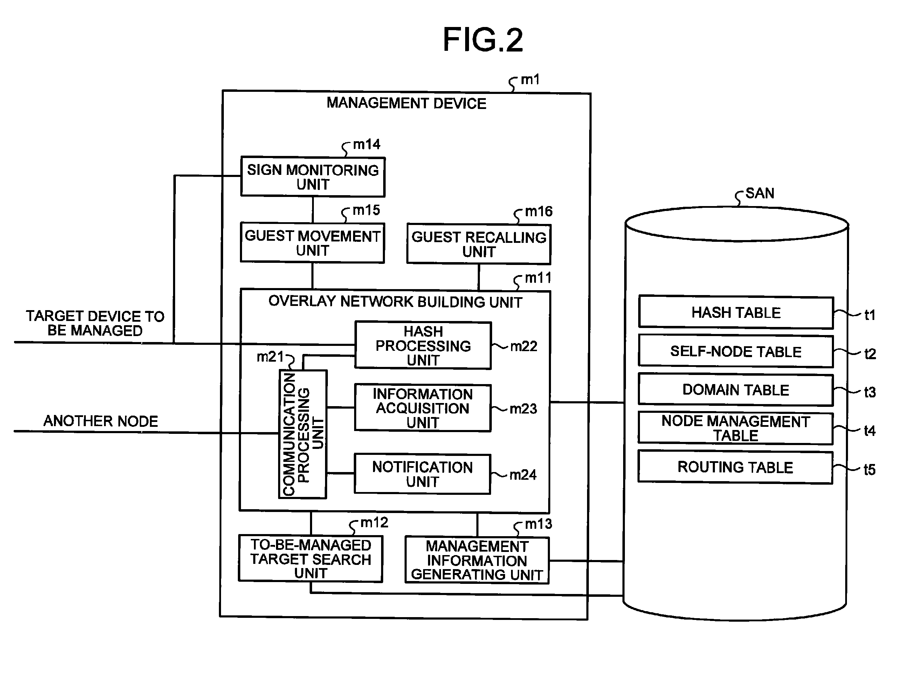

FIG. 1 is an explanatory diagram for a network according to this embodiment, and FIG. 2 is a block diagram of a management device according to this embodiment. As illustrated in FIG. 1, target devices to be managed n1 to n4 are connected with each other through a network. This network is a target network to be monitored.

The target device to be managed n1 is connected to a monitoring device m1, the target device to be managed n2 is connected to a monitoring device m2, and the target device to be managed n3 is connected to a monitoring device m3. The monitoring devices m1 to m4 build an overlay network for a network to which the target devices to be monitored n1 to n4 belong, using a network interface of the target devices to be monitored n1 to n4. The monitoring devices m1 to m4 function as nodes of this overlay network, and can communicate with each other.

The management devices m1 to m4 have the same configuration, and thus the management device m1 will hereinafter be described by way of example. The management device m1 has a sign monitoring unit m14, a guest movement unit m15, and a guest recalling unit m16. The sign monitoring unit m14 monitors a sign of trouble in the target device to be managed n1. The guest movement unit m15 moves a process operated by the target device to be managed n1 to another target device to be managed, upon detection of a sign of trouble in the target device to be managed n1. The guest recalling unit m16 performs a process for recalling, as needed, the process moved from the target device to be managed n1 to another target device to be managed.

As illustrated in FIG. 2, the management device m1 has an overlay network building unit m11, a to-be-managed target search unit m12, and a management information generating unit m13, in addition to the sign monitoring unit m14, the guest movement unit m15, the guest recalling unit m16. The management device m1 is connected to a SAN (Storage Area Network), and stores various information, as will be described later, in the SAN.

The overlay network building unit m11 is a processing unit for building an overlay network for a target network to be managed, and has a communication processing unit m21, a hash processing unit m22, an information acquisition unit m23, and a notification unit m24.

The communication processing unit m21 performs a process for communicating with another node on the network in which the target device to be managed n1 participates as a node. The hash processing unit m22 obtains a hash value based on information acquired by the communication processing unit m21 from another node or information of the target device to be managed, and sets the obtained hash value as a key for the overlay network. The information acquisition unit m22 is a processing unit for acquiring information from another node of the overlay network through the communication processing unit m21. The notification unit m24 is a processing unit for notifying another node of the overlay network about information, through the communication processing unit m21.

The to-be-managed target search unit m12 performs a process for assuming that the target device to be managed m1 which is directly connected to the management device m1 is a self node and searching for a node which belongs to the same management region (domain) as that of the self node, from the overlay network built by the overlay network building unit m11.

The management information generating unit m13 generates management information representing the node acquired through the searching by the to-be-managed target search unit m12, as a to-be-managed target node.

The sign monitoring unit m14 monitors an operating state of the hardware, for example, a fan, memory, CPU (Central Processing Unit), and power supply unit of the target device to be managed n1, to detect a sign of trouble therein.

When the sign monitoring unit m14 detects a sign of failure, the guest movement unit m15 moves a process executed by the target device to be managed n1 to another node on the overlay network.

The guest recalling unit m16 determines whether there is any process moved from the target device to be managed n1 to another node, at the activation of the target device to be managed n1. When determined that there is a process moved to another node, the guest recalling unit m16 recalls the moved process from the destination node.

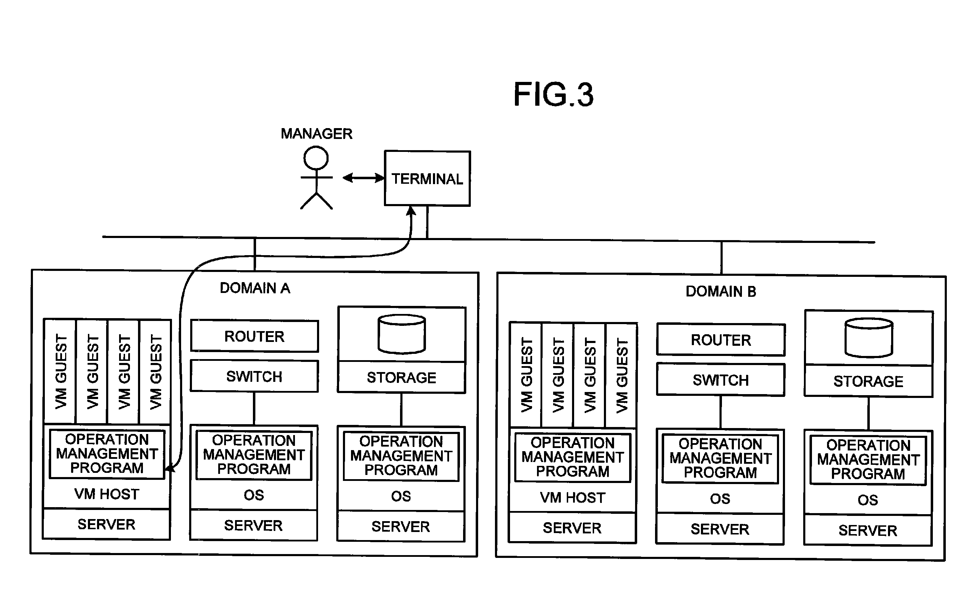

The management device m1 preferably operates as a management program operating on a computer which is the target device to be managed n1. In the example illustrated in FIG. 3, the domain A and the domain B include three servers, and can communicate with each other.

In one of the servers of the domain A, a VM (Virtual Machines) host program for virtually realizing the operating environment of another computer system is operated. Four VM guest programs operate on a VM host program. In this server, an operation management program further operates on the VM host program. The operation management program operating on the VM host program controls the server to function as a management device. The target device to be managed by this operation management program includes the server, the VM host program and a VM guest program operating on the server.

In one of the servers of the domain A, an OS (Operating System) operates, and the operation management program operates on the OS. This server is connected to a switch and a router. The operation management program operating on this server controls the server to function as a management device. The target device to be managed by this operation management program includes the server itself, the switch and the router connected to the server.

In one of the servers of the domain A, the OS (Operating System) operates, and the operation management program operates on the OS. This server is connected to a storage. The operation management program operating on this server controls the server to function as a management device. The target devices to be managed by this operation management program include the server itself and the storage connected to the server.

Like the domain A, in the three servers included in the domain B, the operation management program operates on the VM host program or the OS of the server, and controls each server to function as a management device. Thus, each server, various programs operating on each server, and the hardware connected to each server are managed by the operation management program operating on a corresponding server.

The operation management programs on the servers communicate with each other, and build the overlay network. In addition, the operation management program can collect information about another node in the domain to which the operation management program belongs, and generate management information. The operation management program can be acquired from a terminal which can be accessed from both of the domain A and the domain B.

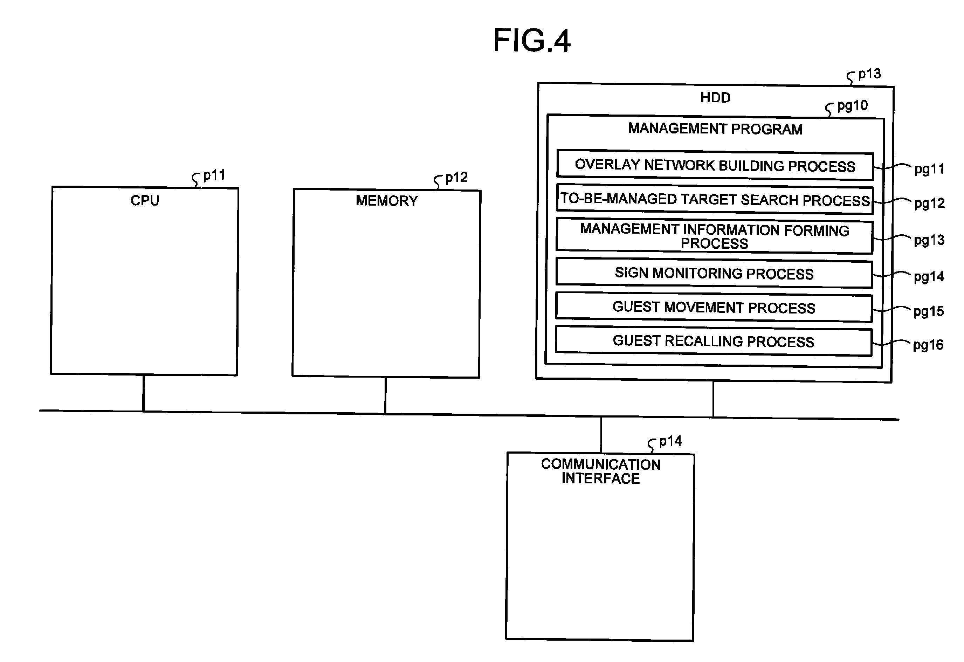

FIG. 4 is an explanatory diagram for the relationship between the hardware and the management program of the server. A management program pg 10 is stored in an HDD (Hard disk drive) p13 inside the server. The management program pg10 includes an overlay network building process pg11 including written operations as an overlay network building unit, a to-be-managed target search process pg12 including written operations as a to-be-managed search unit, a management information forming process pg13 including written operations as a management information generating unit, a sign monitoring process pg14 including written operations as a sign monitoring unit, a guest movement process pg15 including written operations as a guest movement unit, and a guest recalling process pg16 including written operations as a guest recalling unit.

If the server is activated, the management program pg10 is read from the HDD p13, and is developed into a memory p12. The CPU (Central Processing Unit) p11 sequentially executes the programs developed in the memory, thereby controlling the server as a management device. At this time, a communication interface p14 of the server is used as an interface of the overlay network in the management device.

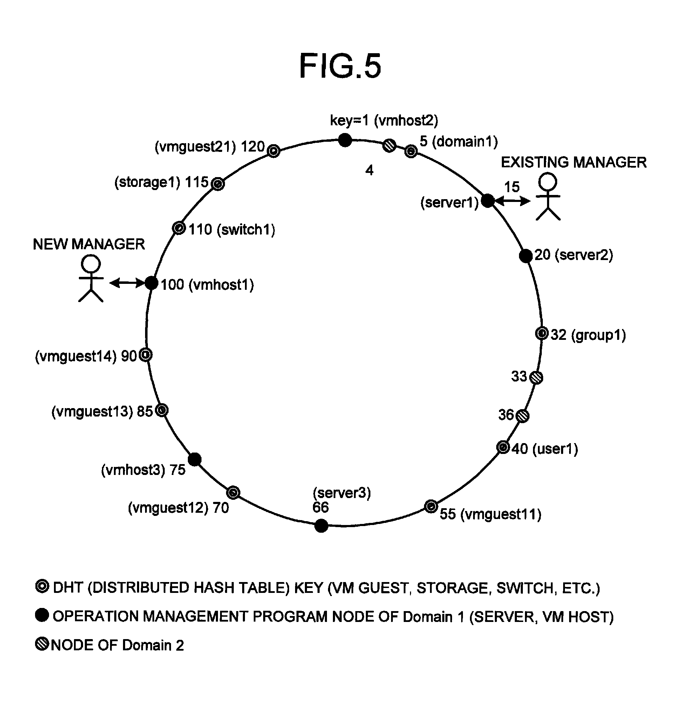

FIG. 5 is an explanatory diagram of an overlay network. Upon activation, the management device or the management program forms an overlay network. When the overlay network building unit m11 uses Chord of a DHT (Distributed Hash Table) algorithm, a circular overlay network illustrated in FIG. 5 is formed.

In the DHT, pairs of a Key and a value are distributed to nodes participating the overlay network, and kept therein. In the case of "Chord", a value, which is obtained as a hashed result using a SHA (Secure Hash Algorithm)-1, is used as a key. Each key has a key which is a larger value than its own key, and is stored in the first node on which the management program operates.

In the example of FIG. 5, the key of "vmhost 2" is 1, the key of "domain 1" is 5, the key of "server 1" is 15, the key of "server 2" is 20, the key of "group 1" is 32, the key of "user 1" is 40, the key of "vmguest 11" is 55. Similarly, the key of "server 3" is 66, the key of "vmguest 12" is 70, the key of "vmhost 3" is 75, the key of "vmguest 13" is 85, and the key of "vmguest 14" is 90. Further, the key of "vmhost 1" is 100, the key of "switch 1" is 110, the key of "storage 1" is 115, and the key of "vmguest 21" is 120.

The vmhosts 1 to 3 and the servers 1 to 3 belong to the domain 1, are nodes on which the management program is operated, and are illustrated with a black circle mark in FIG. 5. The vmguest, the storage, and the switch belonging to the domain 1 are identified with a double circle mark in FIG. 5. In addition, in FIG. 5, the nodes (nodes with keys 4, 33, 36) belonging to the domain 2 are identified with a shaded circle mark.

As described above, a pair of a key and a value has a key which is a larger value than its own key, and is stored in the first node on which the management program is operated. Thus, the Keys 40 and 55 are stored in the node with the Key = 66.

In the case of "Chord", each node keeps information of a previous node, a following node, and a node of (self node key + 2^(x-1)) mod (2^k) (x is a natural number from 1 to k, and k is a bit number of key), as routing information. Specifically, each node has information of discrete nodes, like 1, 2, 4, 8, 16, 32, 64, 128...

As a result, in the Chord DHT, each node can store a Value corresponding to a Key in a node having a next larger Key than the Key. Further, each node can acquire the Value corresponding to the Key from the node having the next larger Key than the Key.

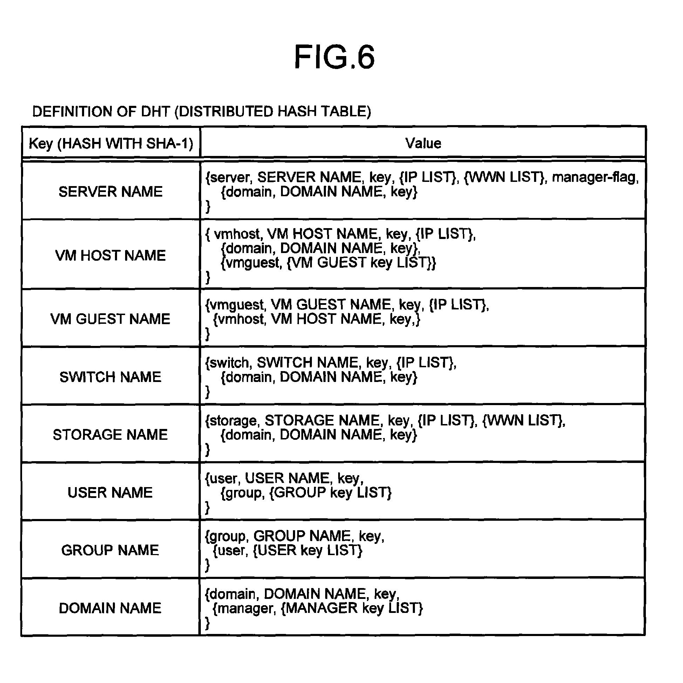

FIG. 6 is an explanatory diagram for a concrete example of definitions of a DHT (Distributed Hash Table). This DHT corresponds to a hash table t1 in SAN of FIG. 1.

In FIG. 6, node names are used as keys for hashing, and Values corresponding to the keys are illustrated.

For a server, a server name is hashed with "SHA-1" to set a Key. The table has, as Values, a tag "server" representing a server, a server name, a key obtained using the server name, a list of IP addresses (IP list) that the server has, a list of WWN (WWN list) that the server has, a manager flag representing whether it functions as a management node, and a list of server-belonging domains and domain keys.

For a VM host, a VM host name is hashed with "SHA-1" to set a Key. The tables has, as Values, a tag "vmhost" representing a VM host, a VM host name, a key obtained using the VM host name, an IP list of VM hosts, a list of domains to which the VM hosts belongs and domain keys, and a list of VM guests operating on the VM host.

For a VM guest, a VM guest name is hashed with "SHA-1" to set a Key. The table has, as Values, a tag "vmguest" representing a VM host, a VM guest name, a key obtained using the VM guest name, an IP list of VM guests, and a name and a key of a VM host on which the VM guest operates.

For a switch, a switch name is hashed with "SHA-1" to set a Key. The table has, as Values, a tag "switch" representing a switch, a switch name, a key obtained using the switch name, an IP list of switches, and a list of domains to which the switches belong and domain keys.

For the storage, a storage name is hashed with "SHA-1" to set a Key. The table has, as Values, a tag "storage" representing the storage, a storage name, a key obtained using the storage name, an IP list of the storages, a WWN list of the storages, and a list of the domains to which the storages belong and domain keys.

For a user, a user name is hashed with "SHA-1" to set a Key. The table has, as Values, a tag "user" representing a user, a user name, a key obtained using the user name, and a list of group names to which the users belong and group keys.

For a group, a group name is hashed with "SHA-1" to set a Key. The table has, as Values, a tag "group" representing a group, a group name, a key obtained using the group name, and a list of user names belonging to the group and keys.

For a domain, a domain name is hashed with "SHA-1" to set a Key. The table has, as Values, a tag "domain" representing a domain, a domain name, a key obtained using the domain name, and a list of keys of management devices in the domain.

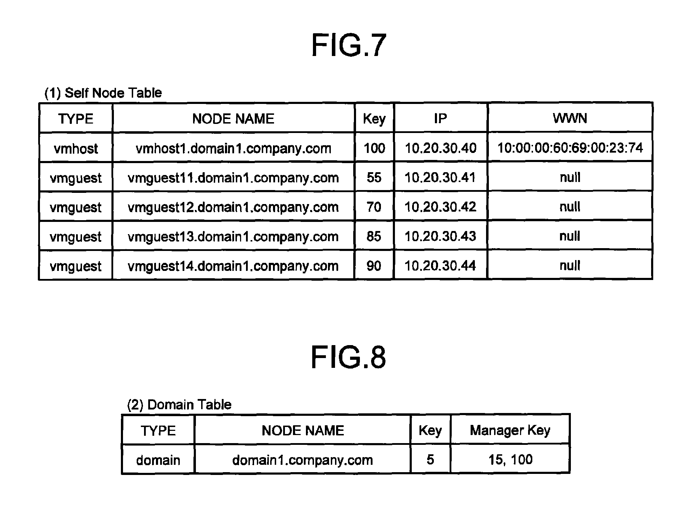

FIG. 7 is a concrete example of a self-node table t2 illustrated in FIG. 1. The self-node table registers information, such as a node on a server on which the management program operates, that is, the server itself, a VM host and the VM guest operating on the server. FIG. 7 illustrates a self-node table formed by a management program operating on a vmhost 1 together with vmguests 11 to 14. The self-node table has items, such as type, node name, key, IP, WWN.

In the example of FIG. 7, a registered entry includes "type" representing "vmhost", "node name" representing "vmhost1.domain1.company.com", "key" representing "100", "IP" representing "10.20.30.40", and "WWN" representing "10:00:00:60:69:00:23:74". In addition, a registered entry includes "type" representing "vmguest", "node name" representing "vmguest11.domain1.company.com", "key" representing "55", "IP" representing "10.20.30.41", and "WWN" representing "null".

Similarly, a registered entry includes "type" representing "vmguest", "node name" representing "vmguest12.domain1.company.com", "key" representing "70", "IP" representing "10.20.30.42", "WWN" representing "null". Further, a registered entry includes "type" representing "vmguest", "node name" representing "vmguest13.domain1.company.com", "key" representing "85", "IP" representing "10.20.30.43", and "WWN" representing "null". A registered entry includes "type" representing "vmguest", "node name" representing "vmguest14.domain1.company.com", "key" representing "90", "IP" representing "10.20.30.44", and "WWN" representing "null".

FIG. 8 illustrates a concrete example of a domain table t3 illustrated in FIG. 1. Each management device or management program hashes the domain name of the domain to which the self node belongs with "SHA-1" to obtain a key, and registers the key in the domain table t3. In the domain table t3, a key of a manager managing the domain is registered, in addition to the domain name and a key of the domain. As long as the management program can operate on the node, an arbitrary node can manage the node as a manager, and a plurality of managers may exist in the domain.

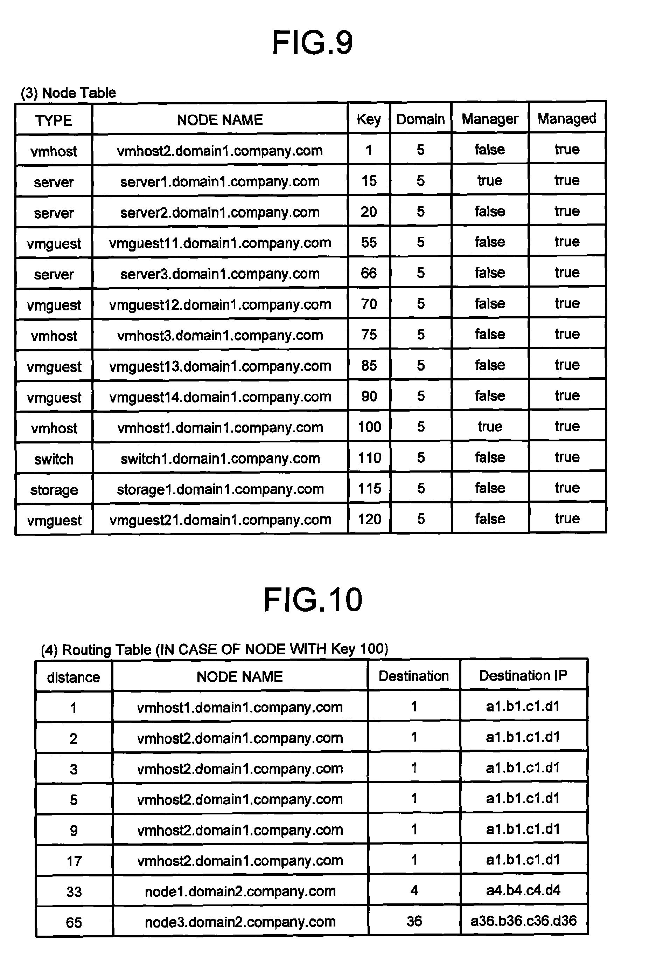

FIG. 9 illustrates a concrete example of a node management table t4 illustrated in FIG. 1. The node management table t4 includes management information generated by the management device or the management program operating as a manager managing the node in the domain, and also includes information for the entire nodes belonging to the same domain as the self node.

The node management table t4 of FIG. 9 is generated and kept by the manager managing the domain 1 of the overlay network illustrated in FIG. 5.

The node management table t4 illustrated in FIG. 9 has items, such as type, node name, key, Domain key, Manager Flag, and Managed Flag. The item "Manger Flag" has a value of "true" when the node is the manager, and has a value of "false" when the node is not the manager. The item "Managed Flag" has a value of "true" when the node is managed, and has a value of "false" when the node is not managed.

Specifically, the node management table t4 has an entry including "type" representing "vmhost", "node name" representing "vmhost2.domain1.company.com", "Key" representing "1", "Domain Key" representing "5", "Manager Flag" representing "false", and "Managed Flag" representing "true".

The node management table t4 has an entry including "type" representing "server", "node name" representing "server1.domain1.company.com", "Key" representing "15", "Domain Key" representing "5", "Manager Flag" representing "true", "Managed Flag" representing "true".

The node management table t4 has an entry including "type" representing "server", "node name" representing "server2.domain1.company.com", "Key" representing "20", "Domain Key" representing "5", "Manager Flag" representing "false", and "Managed Flag" representing "true".

The node management table t4 has an entry including "type" representing "vmguest", "node name" representing "vmguest11.domain1.company.com", "Key" representing "55", "Domain Key" representing "5", "Manager Flag" representing "false", and "Managed Flag" representing "true".

The node management table t4 has an entry including "type" representing "server", "node name" representing "server3.domain1.company.com", "Key" representing "66", "Domain Key" representing "5", "Manager Flag" representing "false", and "Managed Flag" representing "true".

The node management table t4 has an entry including "type" representing "vmguest", "node name" representing "vmguest12.domain1.company.com", "Key" representing "70", "Domain Key" representing "5", "Manager Flag" representing "false", and "Managed Flag" representing "true".

The node management table t4 has an entry including "type" representing "vmhost", "node name" representing "vmhost3.domain1.company.com", "Key" representing "75", "Domain Key" representing "5", "Manager Flag" representing "false", and "Managed Flag" representing "true".

The node management table t4 has an entry including "type" representing "vmguest", "node name" representing "vmguest13.domain1.company.com", "Key" representing "85", "Domain Key" representing "5", "Manager Flag" representing "false", and "Managed Flag" representing "true".

The node management table t4 has an entry including "type" representing "vmguest", "node name" representing "vmguest14.domain1.company.com", "Key" representing "90", "Domain Key" representing "5", "Manager Flag" representing "false", and "Managed Flag" representing "true".

The node management table t4 has an entry including "type" representing "vmhost", "node name" representing "vmhost1.domain1.company.com", "Key" representing "100", "Domain Key" representing "5", "Manager Flag" representing "true", and "Managed Flag" representing "true".

The node management table t4 has an entry including "type" representing "switch", "node name" representing "switch1.domain1.company.com", "Key" representing "110", "Domain Key" representing "5", "Manager Flag" representing "false", "Managed Flag" representing "true".

The node management table t4 has an entry including "type" representing "storage", "node name" representing "storage1.domain1.company.com", "Key" representing "115", "Domain Key" representing "5", "Manager Flag" representing "false", and "Managed Flag" representing "true".

The node management table t4 has an entry including "vmguest", "node name" representing "vmguest21.domain1.company.com", "Key" representing "120", "Domain Key" representing "5", "Manager Flag" representing "false", and "Managed Flag" representing "true".

Accordingly, the node management table t4 is a table for managing the nodes belonging to the domain 1. Thus, those nodes belonging to the domain 2 are not registered in this table.

FIG. 10 illustrates a concrete example of a routing table t5 illustrated in FIG. 1. The routing table t5 is a table used by each management device or management program for routing in the overlay network.

In the example illustrated in FIG. 10, the routing table t5 has items, such as "distance" representing a key of the destination as the final address, "node name" of the destination, "Destination Key" as a key of the address representing the routing address when communicating with the destination, "Destination IP" as an IP address of the routing address.

FIG. 10 illustrates a concrete example of a routing table used by the node corresponding to a key 100. The routing table t5 of FIG. 10 has items, such as "distance" representing "1", "node name" representing "vmhost1.domain1.company.com", "Destination Key" representing "1", "Destination IP" representing "a1.b1.c1.d1", "distance" representing "2", "node name" representing "vmhost2.domain1.company.com", "Destination Key" representing "1", "Destination IP" representing "a1.b1.c1.d1".

The routing table t5 has items, such as "distance" representing "3", "node name" representing "vmhost2.domain1.company.com", "Destination Key" representing "1", and "Destination IP" representing "a1.b1.c1.d1".

The routing table t5 has items, such as "distance" representing "5", "node name" representing "vmhost2.domain1.company.com", "Destination Key" representing "1", and "Destination IP" representing "a1.b1.c1.d1".

The routing table t5 has items, such as "distance" representing "9", "node name" representing "vmhost2.domain1.company.com", "Destination Key" representing "1", and "Destination IP" representing "a1.b1.c1.d1".

The routing table t5 has items, such as "distance" representing "17", "node name" representing "vmhost2.domain1.company.com", "Destination Key" representing "1", and "Destination IP" representing "a1.b1.c1.d1".

The routing table t5 has items, such as "distance" representing "33", "node name" representing "node1.domain2.company.com", "Destination Key" representing "4", and "Destination IP" representing "a4.b4.c4.d4".

The routing table t5 has items, such as "distance" representing "65", "node name" representing "node3.domain2.company.com", "Destination Key" representing "36", "Destination IP" representing "a36.b36.c36.d36".

Accordingly, the routing table t5 defines that routing is done for the Key1 (IP: a1.b1.c1.d1) when any of the nodes (key: 1,2,3,5,9,17) belonging to the domain 1 is the destination. The routing table t5 defines that routing is done for the Key 4 (IP: a4.b4.c4.d4) when the node (key: 33) belonging to the domain 1 is the destination, and defines also that routing is done for the Key 36 (IP: a36.b36.c36.d36) when the node (key: 65) belonging to the domain 2 is the destination.

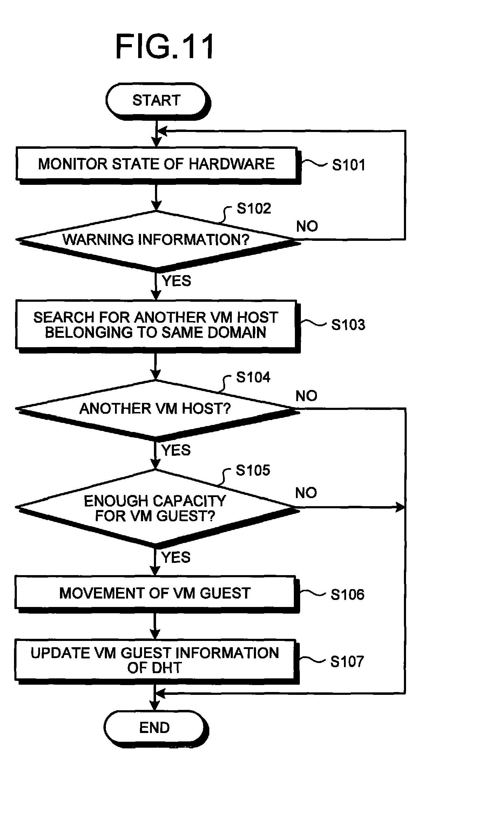

FIG. 11 is a flowchart for explaining the movement of a VM guest. In operation of the VM host, the management program operating on the VM host monitors the state of the hardware in accordance with the sign monitoring process pg14 (S101).

When the sign monitoring process pg14 detects warning information as a sign of trouble in the operating state of the hardware, such as the fan, memory, CPU, and power supply unit (S102, Yes), the guest movement process pg15 searches the hash table t1 for another VM host (S103). At this time, the VM host to be searched for is preferably a VM host belonging to the same domain, that is, belonging to the same management region.

When another VM host has been found (S104, Yes), the guest movement process pg15 communicates with the VM host, and checks whether this VM host has enough capacity for moving the VM guest of the self host (S105). When another VM host has not been found (S104, No), or when the found VM host does not have enough capacity (S105, No), the process ends as is.

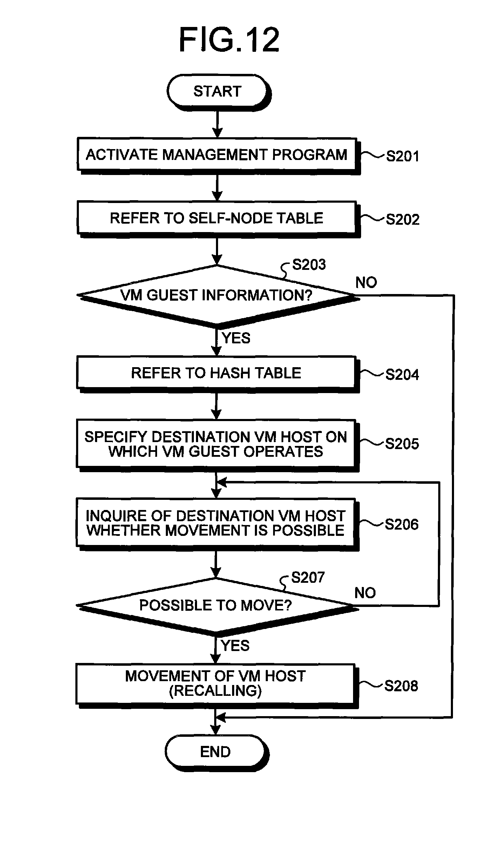

FIG. 12 is a flowchart for explaining a process operation at the time of startup of a VM host at the activation of the server. The started VM host without a warning factor activates the management program (S201). The guest recalling process pg16 of the management program refers to the self-node table t2 of the SAN, and reads VM guest information generated by this VM host (S202). Other than the self-node table, information is collected at the start up, and a new table is formed.

When no VM guest information is included in the self-node table t2 (S203, No), the guest recalling process pg16 ends the process as is. On the contrary, when VM guest information is included in the self-node table t2 (S203, Yes), the guest recalling process pg16 searches the hash table t1 for information about the VM guest (S204), and specifies on which VM host the VM guest presently operates (S205). This specification is made by calculating a node having a hash table using the Key of the VM guest in the self-node table t2, and by finding the VM host using a value of the hash table of the VM guest.

The guest recalling process pg16 communicates with an operation management program on the destination VM host on which the VM guest presently operates, and inquires whether the VM guest can be moved (S206).

As a result of inquiry, if it is possible to move the VM guest (S207, Yes), the guest recalling process pg16 moves the VM guest to the original VM host (S208), updates the hash table, and ends the process.

As a result of inquiry, if it is not possible to move the VM guest (S207, No), the guest recalling process pg16 returns to Step S206, and periodically inquires of the target VM host for recalling. When the target VM host is in an enabled state to recall, the recalling VM host may be informed of it.

Accordingly, when the VM guest is moved, the hash table t1 is rewritten. Thus, it is possible to understand on which VM host the VM guest operates. The self-node table t2 is not rewritten upon movement of the VM guest, and represents the VM guest originally operating on the VM host. In addition, the self-node table t2 is kept in the SAN. Thus, information is not lost due to any failure happened in the VM host or restart of the VM host.

Therefore, when a further abnormality occurs in the target VM host to which the VM guest is moved, and when the VM guest is repeatedly moved, the VM guest can quickly and surely be recalled without following the movement track of the VM guest.

As described above, the management device, the management program, and the management method according to this embodiment monitor the operating state of the target device to be managed as a node of a target network to be managed, and moves a process executed by the target device to be managed to another node when a sign of failure is detected. A determination is made as to whether there is a process which has been moved to another node at the activation of the target device to be managed, and then the moved process is recalled. Thus, the moved process can surely be recalled.

### Reference Signs List

| | |
|---|---|
| m1 | management device |
| m11 | overlay network building unit |
| m12 | to-be-managed target search unit |
| m13 | management information generating unit |
| m14 | sign monitoring unit |
| m15 | guest movement unit |
| m16 | guest recalling unit |
| m21 | communication processing unit |
| m22 | hash processing unit |
| m23 | information acquisition unit |
| m24 | notification unit |
| t1 | hash table |
| t2 | self-node table |
| t3 | domain table |
| t4 | node management table |
| t5 | routing table |
| p11 | CPU |
| p12 | memory |
| p13 | HDD |
| p14 | communication interface |
| pg10 | management program |
| pg11 | overlay network building process |
| pg12 | to-be-managed target search process |
| pg13 | management information forming process |
| pg14 | sign monitoring process |
| pg15 | guest movement process |
| pg16 | guest recalling process |

## Claims

1. A management device comprising:
a monitoring unit that monitors an operating state of a target device to be managed as a node of a network to be managed;
a movement unit that moves a process executed by the target device to be managed to another node on the network, when a sign of failure is detected, as a monitoring result of the monitoring unit; and
a recalling unit that determines, at activation of the target device to be managed, whether there is a process having been moved from the target device to be managed to another node, and moves the moved process from a destination node when there is the process having been moved to the another node.

2. The management device according to claim 1, further comprising
a management information generating unit that records information about a process executed by the target device to be managed into a recording device different from the target device to be managed, and wherein
the recalling unit determines whether there is a process having been moved from the target device to be managed to another node by referring to the recording device.

3. The management device according to claim 1 or 2, wherein
the movement unit selects a node belonging to a same management region as a management region of the target device to be managed, as a destination.

4. A management program which operates on a computer as a node of a network to be managed, the program causing a computer to execute:
determining, at activation, whether there is a process having been moved from the computer to another node, and recalling the moved process from a destination node when there is the process moved to the another node;
monitoring an operating state of the computer; and
moving a process executed by the computer to another node on the network, when a sign of failure is detected as a result of the monitoring.

5. The management program according to claim 4, wherein
the recalling includes treating another node operating on a computer on which the management program operates, as a destination of the moving and the recalling.

6. A management program for causing a computer to execute:
monitoring an operating state of a computer as a node of a network to be managed, to detect a sign of failure therein;
obtaining a key of each process operating on the computer, to generate a self-node table for a process operating on the computer;
generating a hash table having a combination of the key and information about a process corresponding thereto, for a node on the network defined using a predetermined rule in accordance with the key;
moving the process operating on the computer to another node on the network to update the hash table, when a sign of failure in the computer is detected, as a monitoring result of the monitoring;
specifying a node having a hash table with a key corresponding to a key of the self-node table, and extracting a destination node from the hash table, at activation of the computer; and
recalling the process moved to the destination node to the computer.

7. A managing method for managing a network to be managed, the method comprising:
determining whether there is a process having been moved from a node of the network to another node at activation of the node, and recalling the moved process from a destination node when there is the process moved to the another node;
monitoring an operating state of the node; and
moving the process executed by the node to another node on the network, when a sign of failure is detected as a result of the monitoring.
